# EUROPEAN PATENT SPECIFICATION

(11) **EP 4 125 248 B1**
(45) Date of publication and mention of the grant of the patent: **16.09.2026**
(21) Application number: 22186536.3
(22) Date of filing: 22.07.2022
(51) Int. Cl.: H04L 41/0853, H04L 41/22, H04L 41/00

(54) **INFORMATION PROCESSING APPARATUS, DEVICE MANAGEMENT METHOD, AND PROGRAM**
INFORMATIONSVERARBEITUNGSVORRICHTUNG, VORRICHTUNGSVERWALTUNGSVERFAHREN UND PROGRAMM
APPAREIL DE TRAITEMENT D'INFORMATIONS, PROCÉDÉ DE GESTION DE DISPOSITIF ET PROGRAMME

(30) Priority: 30.07.2021 JP 2021125161
(43) Date of publication of application: 01.02.2023
(73) Proprietor: Canon Kabushiki Kaisha, Ohta-ku Tokyo 146-8501 (JP)
(72) Inventor: NAGASHIMA, Takeyuki, Tokyo, 146-8501 (JP)
(74) Representative: Canon Europe Limited

(56) References cited:
- US-A1- 2010 309 501
- US-A1- 2016 105 307

## Description

### BACKGROUND OF THE INVENTION

### Field of the Invention

The present invention relates to a technique for implementing appropriate device management in a case where a non-management target device exists in a device management system including one or more devices connected to a network.

### Description of the Related Art

Recently, there has been provided a device management system that selects a plurality of devices connected to a network in an office, from a list of devices found in the network and executes tasks such as a device security monitoring task and a device power management task, as discussed in Japanese Patent Application Laid Open No. 2016-153992.

In some cases, a management server included in the device management system provides a function of enabling an administrator to explicitly specify a part of the plurality of devices connected to the network, as non-management target devices. In a case where a specification about a non-management target device is set, any device corresponding to the specification is not to be found in search processing on the network after the specification is set. This enables the administrator to perform device management while narrowing down the devices to management target devices by using the management server.

However, there is a case where, before the specification is set or the set specification is changed, the management server has already completed search processing on the network including the device(s) corresponding to the specification. Since the specification is applied to search processing to be performed after the specification is set, if the device management has already been started for the devices found in the previous search processing, processing related to the device management may be performed continuously on a device even after the device is specified as a non-management target device.

An issue about the conventional device management system is that it is difficult for the administrator to promptly recognize that the processing is continuously performed on the non-management target device. Particularly, there is a possibility that processing related to device security monitoring or device power management can also be applied to the non-management target device. More specifically, there is a possibility that an incorrect security setting or a power on/off schedule unsuitable for the operation of the device user can be applied to the device.

US 2016/105307 A1 discusses a management system with a management agent program installed and communicable with a first information processing apparatus registered as a management agent via a network. The management system receives, from the first information processing apparatus, communication information of a network device which failed in communication for monitoring with the first information processing apparatus among network devices as management targets of the first information processing apparatus and performs control to register a second information processing apparatus as a management agent to perform the communication for monitoring with the network device corresponding to the received communication information.

### SUMMARY OF THE INVENTION

The present invention is directed to a device management method capable of suppressing provision of a device management function to a device specified as a non-management target device.

According to a first aspect of the present invention, there is provided an information processing apparatus as specified in claims 1 and 9. According to a second aspect of the present invention, there is provided a device management method as specified in claims 12 and 13. According to a third aspect of the present invention, there is provided a program as specified in claims 14 and 15.

Further features of the present invention will become apparent from the following description of embodiments with reference to the attached drawings.

### BRIEF DESCRIPTION OF THE DRAWINGS

Fig. 1 is a diagram illustrating an example of a network configuration of a device management system including an information processing apparatus and a device according to a first embodiment.
Fig. 2 is a block diagram illustrating a hardware configuration of the information processing apparatus serving as a management server according to the first embodiment.
Fig. 3 is a block diagram illustrating a hardware configuration of the device according to the first embodiment.
Fig. 4 is a block diagram illustrating software configurations of the information processing apparatus and the device according to the first embodiment.
Fig. 5 is a diagram illustrating a device list according to the first embodiment.
Fig. 6 is a diagram illustrating an example of a screen provided by the management server according to the first embodiment.
Fig. 7 is a diagram illustrating an example of a device search task created by the management server according to the first embodiment.
Fig. 8 is a flowchart illustrating processing performed by device management software to create and register the device search task according to the first embodiment.
Fig. 9 is a flowchart illustrating processing related to execution of the device search task by the management server, where a non-management target device is specified according to the first embodiment.
Fig. 10 is a diagram illustrating an example of processing performed by a management server according to a second embodiment.
Fig. 11 is a diagram illustrating an example of a device status monitoring task created by a management server according to a third embodiment.
Fig. 12 is a diagram illustrating an example of processing performed by a management server according to a fourth embodiment.

### DESCRIPTION OF THE EMBODIMENTS

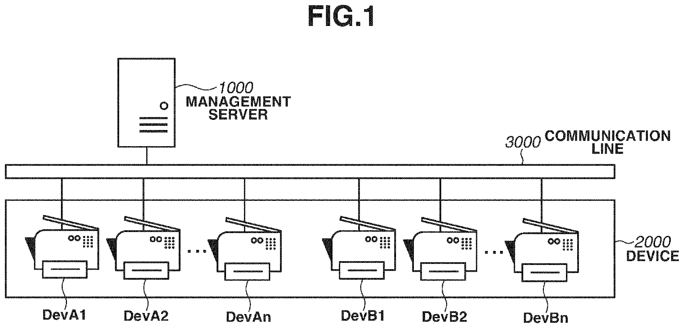

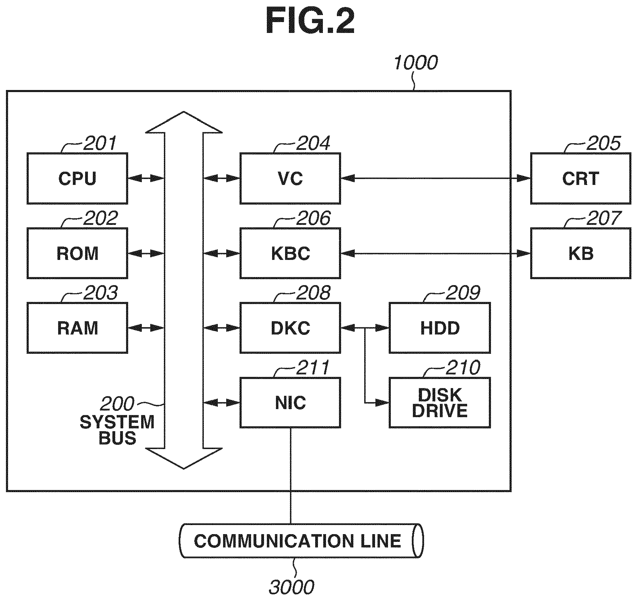

Fig. 1 illustrates an example of a configuration of a device management system according to a first embodiment of the present invention. The device management system includes an information processing apparatus (a management server 1000) and one or more devices 2000 that can be specified as management target devices. In the example of Fig. 1, "DevA1" to "DevAn" and "DevB1" to "DevBn" (n is a natural number) are included as the devices 2000. Device management software for monitoring and managing the devices 2000 is installed onto the information processing apparatus and executed, so that the information processing apparatus operates as the management server 1000. The management server 1000 provides a device information screen and a setting screen for monitoring and managing the devices 2000 to a network administrator via a display device 205 (refer to Fig. 2) included in the information processing apparatus. Alternatively, the device information screen and the setting screen for monitoring and managing the devices 2000 can be provided as a web service to the network administrator via a web browser.

Hereinafter, "DevA1" in the devices 2000 will be referred to as the device DevA1. The same also applies to "DevA2" to "DevAn" and "DevB1" to "DevBn" in the devices 2000.

The management server 1000 and the devices 2000 are connected to a communication line (a network) 3000 such as a local area network (LAN) or a wireless network. The management server 1000 creates and executes tasks, such as a device security monitoring task and a device power management task, for the devices 2000 to be managed, thereby implementing device management for the devices 2000. The communication line 3000 that connects the management server 1000 and the devices 2000 may be an intranet line or an internet line.

Fig. 2 is a block diagram illustrating an example of a hardware configuration of the information processing apparatus serving as the management server 1000.

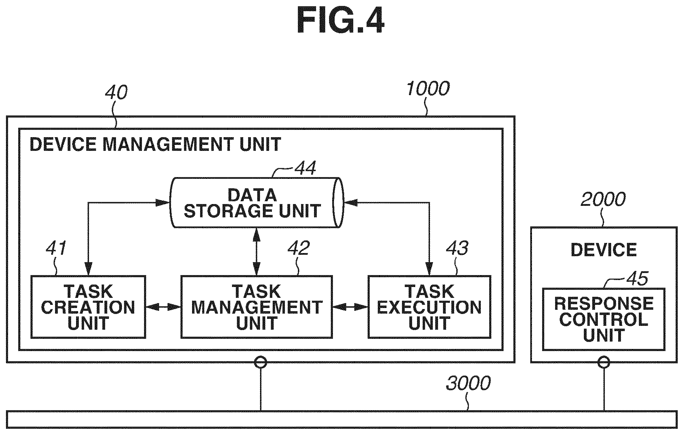

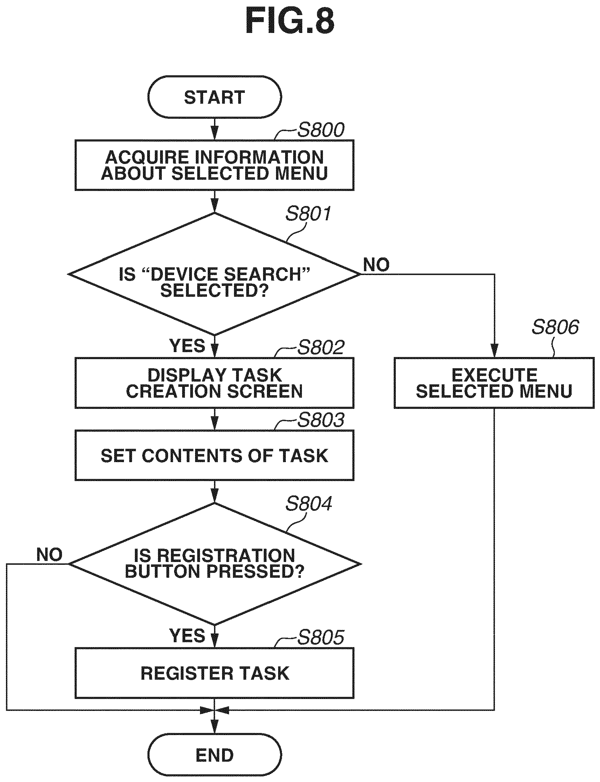

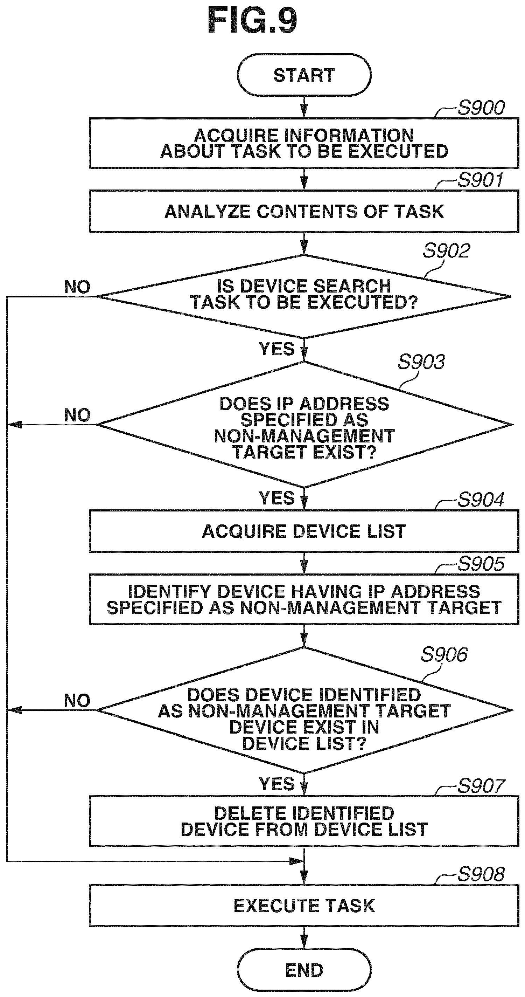

A central processing unit (CPU) 201 uses a random access memory (RAM) 203 as a work area to execute programs stored in a read only memory (ROM) 202 and a hard disk drive (HDD) 209.
These components are connected to each other via a system bus 200. In the present embodiment, the CPU 201 executes the device management software as one of the programs, thereby implementing functions of a task creation unit 41, a task management unit 42, and a task execution unit 43 (refer to Fig. 4). More specifically, processing steps in flowcharts illustrated in Figs. 8 and 9 are performed by the management server 1000 according to the program executed by the CPU 201.

The device management software can be supplied from a storage medium, such as a floppy disk (FD), a compact disk read only memory (CD-ROM), a digital versatile disc (DVD), or an integrated circuit (IC) memory card, which can be mounted on a disk drive 210. The CPU 201 accesses the HDD 209 and the disk drive 210 via a disk controller (DKC) 208 to install the task creation unit 41, the task management unit 42, and the task execution unit 43 onto the HDD 209. The CPU 201 also displays a user interface on the display device (the cathode-ray tube (CRT)) 205 via a video card (VC) 204. Furthermore, the CPU 201 performs control according to an instruction input to the user interface from a pointing device such as a keyboard (KB) 207 or a mouse, via a keyboard controller (KBC) 206. The CPU 201 can also perform processing for communicating with the devices 2000 on the communication line 3000 via a network interface card (NIC) 211.

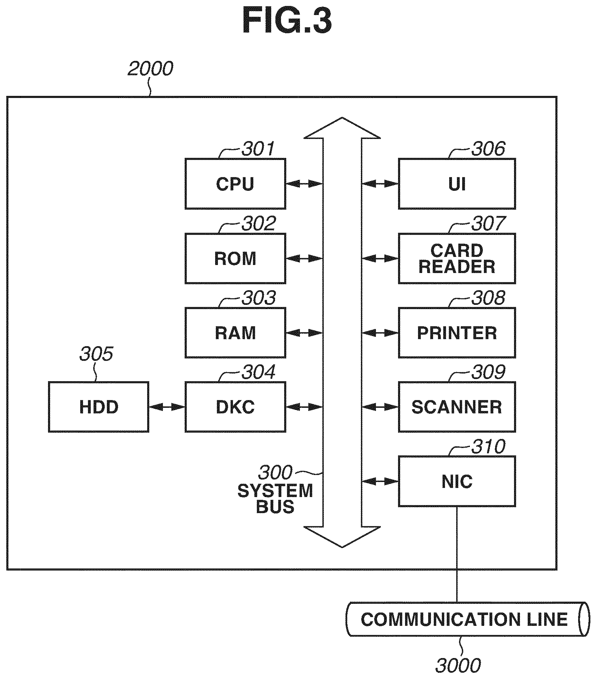

Fig. 3 is a block diagram illustrating a hardware configuration of each of the devices 2000.

Each of the devices 2000 is an image forming apparatus such as a printer, a copy machine, a digital multifunction peripheral (MFP), or a three-dimensional (3D) printer.

Each of the devices 2000 has printing-related functions, such as a print function and a copy function, and a function of communicating with an external apparatus, such as the management server 1000, via the communication line 3000. A CPU 301 functions as a controller that controls the entire device 2000. The CPU 301 controls a printer 308 and a scanner 309 connected to a system bus 300, based on a control program. The control program includes a response control unit 45 (refer to Fig. 4) of the device 2000, and the CPU 301 uses a RAM 303 as a work area to execute the response control unit 45 stored in a ROM 302 or a HDD 305. The CPU 301 executes functional units according to the present embodiment via the system bus 300. The CPU 301 also accesses the HDD 305 via a disk controller (DKC) 304.

The CPU 301 can perform processing for communicating with the management server 1000 on the communication line 3000 via a NIC 310. A user interface (UI) 306 includes a switch and a light emitting diode (LED) display device that can be operated by a user of the device 2000. The UI 306 transmits, to the CPU 301, information about an operation performed on the UI 306 by the user of the device 2000. The CPU 301 collates IC card information received from a card reader 307 with user information prestored in the HDD 305, and performs login processing on the user.

Fig. 4 illustrates examples of configurations of software modules of the management server 1000 and each of the devices 2000.

The management server 1000 includes the task creation unit 41, the task management unit 42, the task execution unit 43, and a data storage unit 44 that are implemented by executing the device management software. The task creation unit 41 of the management server 1000 can be configured as a web-based function. In this case, the administrator who uses the management server 1000 can use the function via a web browser. The HDD 209 or a database service (not illustrated) operating on the network 3000 can be used as the data storage unit 44 of the management server 1000.

The task management unit 42 has a function of managing a task generated by the task creation unit 41 and stored in the data storage unit 44. Based on a schedule set for the task, the task management unit 42 instructs the task execution unit 43 to execute the task.

The task creation unit 41 creates a task that defines processing to be performed for the devices 2000 on the network 3000 by the management server 1000. Specific examples of the processing include at least one of processing for performing a device search on the network 3000, processing for collecting and distributing information, such as setting data, security setting information, and software information, from and to one or more specified devices, and processing for distributing power status change instructions to one or more specified devices. Examples of the task created by the task creation unit 41 include a device search task, and a device search function using a simple network management protocol (SNMP), an internet protocol (IP) broadcast, or a service location protocol (SLP)/multicast can be used for the device search task. When creating a task, the task creation unit 41 sets a schedule that describes an execution timing of the task. The task management unit 42 instructs the task execution unit 43 to execute the task based on the set schedule.

The task execution unit 43 executes the task according to the instruction from the task management unit 42.

In the case of the device search task, the task execution unit 43 controls processing for transmitting a request for device search processing that involves acquisition of device information managed by a management information base (MIB) or the like, via the communication line 3000. When the response control unit 45 of the target device 2000 receives the device information as a response to the request from the task execution unit 43, the response control unit 45 transmits the received device information to the task execution unit 43. In the present embodiment, as a result of the device search processing, the task execution unit 43 acquires the device information, such as a device name, a product name, and an address of a found device, and the data storage unit 44 stores the device information in a database operating on the HDD 209.

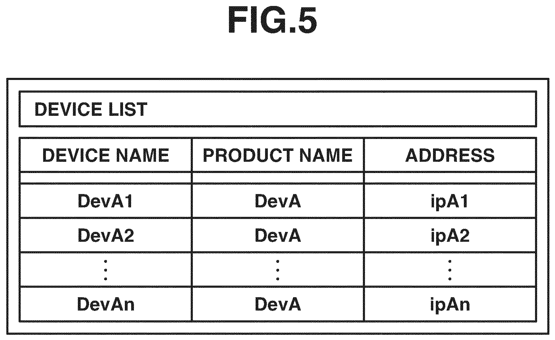

Fig. 5 illustrates a device list as an example of the device search result. More specifically, Fig. 5 illustrates a result obtained when a device search is performed by specifying, as a search range, the IP addresses set for the devices DevA1 to DevAn illustrated in Fig. 1. The device search can be performed by specifying a fully qualified domain name (FQDN) instead of the IP addresses.

The device list illustrated in Fig. 5 includes device information such as a device name, a product name, and an address. For example, the device DevA1 is the device 2000 having a device name "DevA1", a product name "DevA, and an address "ipA1". The same also applies to the devices DevA2 to DevAn.

The device information is acquired by the task execution unit 43 through the device search and stored by the data storage unit 44 as described above. Alternatively, a file, such as a comma separated value (CSV) file, can be imported to the device management software. This makes it possible to register a management target device.

In the device search task created by the task creation unit 41, a range of desired addresses can be specified as a non-management target by the administrator. A piece or a range of network information, such as IP addresses, or device identification information can be specified as the non-management target.

For example, there is a case where the administrator specifies the device DevA2, which is initially specified as a management target device, as a non-management target device among the devices DevA1 to DevAn of the devices 2000 that are the management target devices stored in the device list illustrated in Fig. 5.

In this case, when newly creating the device search task, the task creation unit 41 sets the IP address of the device DevA2 specified by the administrator as a non-management target, so that the task execution unit 43 performs a device search in a specified range excluding the non-management target.

It is likely that the administrator desires to exclude the device specified as the non-management target device or the device corresponding to the condition of the range specified as the non-management target, from target devices of another task related to management processing, such as a data acquisition task, a data distribution task, or a device power management task.

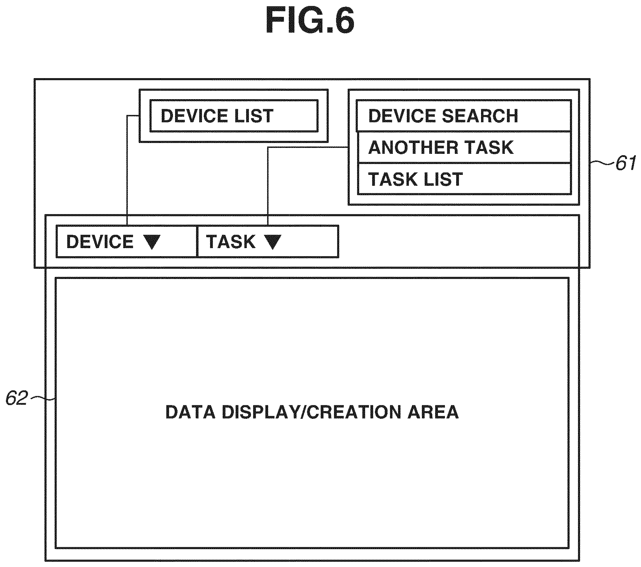

A method for creating and setting the device search task including a specification about a non-management target will be described in detail with reference to Figs. 6 to 9.

Fig. 6 illustrates an example of a screen provided by the device management software. The screen includes a menu 61 and a data display/creation area 62. In the example of Fig. 6, the screen is displayed by a device management unit 40 on the CRT 205.

The menu 61 includes a "Device" menu and a "Task" menu. The "Device" menu includes a "Device List" sub-menu for displaying a list of devices corresponding to the device information stored and managed in the device list illustrated in Fig. 5. The "Task" menu includes, as sub-menus, "Device Search" for creating the device search task, "Another Task" for creating a task different from the device search task, and "Task List" for displaying the created tasks. In the present embodiment, "Another Task" is a sub-menu for calling a function of creating a task, such as a device security monitoring task or a device power management task, for one or more target devices selected from the plurality of devices 2000 managed in the device list illustrated in Fig. 5.

The device security monitoring task is a task for monitoring whether settings, such as a setting for restrictions on a password for logging into the target device 2000 and a setting for whether to use various ports of the target device 2000, are maintained in a secure state intended by the administrator. The device power management task is a task for specifying times for shutdown, startup, and reboot of the target device 2000.

In addition to the device security monitoring task and the device power management task, a device clone creation task and a storage back-up creation task are assumed to be created. In the present embodiment, the device clone creation task is a task for acquiring data including various setting items of the target device 2000, such as a power saving setting and a security setting, and setting values of the setting items. The storage back-up creation task is a task for backing up a storage area that stores user data registered in the target device 2000, such as an address book and user registration information. The data of the target device 2000 acquired as a device clone can also be set in another target device 2000 having the same setting items.

The "Task List" sub-menu corresponds to a function of displaying a list of tasks created by the task creation unit 41. The task creation unit 41 can create a task by editing any of the tasks displayed in the "Task List" sub-menu instead of newly creating a task.

Processing performed by the device management software to create and register the device search task will be described with reference to a flowchart illustrated in Fig. 8.

In step S800, the task creation unit 41 acquires information about a menu selected from the menu 61 illustrated in Fig. 6. In step S801, based on the acquired information, the task creation unit 41 determines whether the selected menu is "Device Search". If the task creation unit 41 determines that the selected menu is "Device Search" (YES in step S801), the processing proceeds to step S802. If the task creation unit 41 determines that the selected menu is not "Device Search" (NO in step S801), the processing proceeds to step S806. In step S806, the task creation unit 41 executes the selected menu.

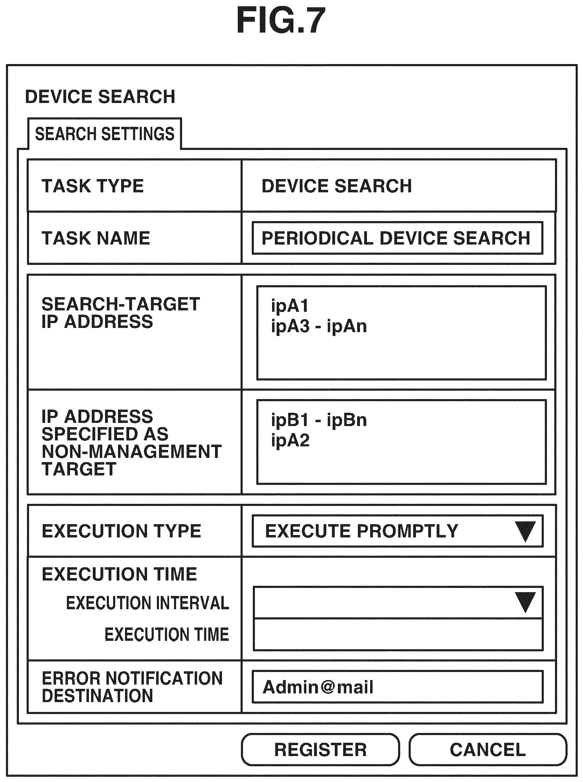

In step S802, the task creation unit 41 provides a task creation screen for creating the device search task. For example, the task creation unit 41 displays a "Device Search" screen illustrated in Fig. 7, on the CRT 205. In step S803, the task creation unit 41 accepts settings input by the user via the task creation screen, and sets and reflects the contents of the task on the screen.

The "Device Search" screen illustrated in Fig. 7 includes a "Search Settings" section sheet.

The "Search Settings" section sheet includes setting items such as "Task Type", "Task Name", "Search-Target IP Address", "IP Address Specified as Non-Management Target", "Execution Type", "Execution Time", and "Error Notification Destination".

A fixed character string that describes the type of task to be created is displayed as "Task Type". The name of the task to be created can be set in a "Task Name" edit box. In the present embodiment, the task creation unit 41 displays "Device Search" as "Task Type", and sets "Periodical Device Search" as "Task Name".

An IP address for searching for a management target device can be set in a "Search-Target IP Address" edit box. In the "Search-Target IP Address" edit box, a range of IP addresses can be specified as a search range. The search range can be specified using the network information different from the IP addresses, by additionally providing an extended frame on the screen illustrated in Fig. 7.

The IP addresses of the devices 2000 to be specified as the non-management target can be set in an "IP Address Specified as Non-Management Target" edit box. In the "IP Address Specified as Non-Management Target" edit box, a single device or a range including a plurality of devices can be specified by using various types of network information including IP address information. Instead of the network information, identification information (e.g., an individual identification number or a device name) about a device to be specified as a non-management target device can also be specified.

In the display example of Fig. 7, the task creation unit 41 sets "ipA1" and "ipA3-ipAn", which represent the IP address of the device DevA1 and the IP addresses of the devices DevA3 to DevAn, respectively, in the "Search-Target IP Address" edit box. In the present embodiment, the IP addresses are written in simplified easy-to-understand notation, such as "ipA1" and "ipA3-ipAn", instead of being written in notation in which a 32-bit numeric value or a 128-bit numeric value is written with dots. The task creation unit 41 newly sets "ipA2", which represents the IP address of the device DevA2, in the "IP Address Specified as Non-Management Target" edit box, in addition to "ipB1-ipBn" which represent the IP addresses of the devices DevB1 to DevBn.

Execution timing of the device search task can be set as "Execution Type". More specifically, from a drop-down list for "Execution Type", the user can select a desired option, such as "Execute Promptly" for enabling the user to promptly execute the created device search task, "Execute at Appointed Time" for enabling the user to book an execution time, or "Execute Periodically" for enabling the user to periodically execute the task. "Execution Time" includes "Execution Interval" and "Execution Time". A schedule for executing the device search task is set as "Execution Interval" and "Execution Time" if "Execute at Appointed Time" or "Execute Periodically" is selected as "Execution Type".

For example, "Execution Interval" and "Execution Time" can be set as follows.
Monthly: An execution date and an execution time are specified.
Weekly: An execution day of the week and an execution time are specified.
Daily: An execution time is specified.
The method for setting "Execution Interval" and "Execution Time" are not limited thereto. An irregular schedule or interval (e.g., 9:00 to 17:00 on Monday to Friday, all day on Saturday and Sunday) can also be specified.

In an "Error Notification Destination" edit box, a mail address can be specified as an error notification destination. If some sort of error, such as presence of a non-responding device, has occurred as a device search result, an error notification is transmitted to the mail address. In the present embodiment, the task creation unit 41 selects "Execute Promptly" as "Execution Type", and sets "Admin@mail" as the error notification destination.

The "Device Search" screen illustrated in Fig. 7 further includes a "Register" button for registering the set task and a "Cancel" button for canceling the registration processing.

In step S804, the task creation unit 41 determines whether the "Register" button is pressed via the KB 207. If the task creation unit 41 determines that the "Register" button is pressed (YES in step S804), the processing proceeds to step S805. In the present embodiment, the task creation unit 41 determines that the "Register" button is pressed for registering the device search task set in step S803, and then the processing proceeds to step S805. In step S805, the data storage unit 44 registers the device search task by storing the contents of the task set in step S803 into a storage unit such as the HDD 209. In the present embodiment, the task creation unit 41 completes the registration of the device search task in which the IP address "ipA2" of the device DevA2 is newly set as the non-management target. On the other hand, if the task creation unit 41 determines that the "Cancel" button is pressed (NO in step S804), the processing ends.

In step S805, the data storage unit 44 may additionally store information about the device DevA2 newly specified as a non-management target device, in a non-management target device list (not illustrated) that manages the devices corresponding to the information specified as the non-management target.

Processing related to execution of a task based on the execution schedule of the device management software will be described with reference to a flowchart illustrated in Fig. 9.

In step S900, the task execution unit 43 acquires information about a task for which an execution instruction is issued from the task management unit 42, from the information stored by the data storage unit 44. In the present embodiment, a case where the task execution unit 43 acquires information about the device search task registered in step S805 will be described in detail. In step S901, the task execution unit 43 analyzes the information about the task acquired in step S900. The task execution unit 43 can identify the contents of the task set in step S803, such as the task type, the search-target IP addresses, the IP addresses specified as the non-management target, and the error notification destination.

In step S902, the task execution unit 43 determines whether the task to be executed is the device search task. If the task execution unit 43 determines that the task to be executed is the device search task (YES in step S902), the processing proceeds to step S903. On the other hand, if the task execution unit 43 determines that the task to be executed is not the device search task (NO in step S902), the processing proceeds to step S908. In step S908, the task execution unit 43 executes the task based on the set contents.

In step S903, the task execution unit 43 determines whether a specification corresponding to a non-management target device is included in the contents of the task. If a specification corresponding to a non-management target device is included (YES in step S903), the processing proceeds to step S904. If a specification corresponding to a non-management target device is not included (NO in step S903), the processing proceeds to step S908. In step S908, the task execution unit 43 executes the task. In the present embodiment, in the device search task set in step S803, "ipA2" is additionally set as a specification corresponding to a non-management target device.

In step S904, the task execution unit 43 acquires a device list from the data storage unit 44.

In the present embodiment, the task execution unit 43 acquires the device list illustrated in Fig. 5.

In step S905, from the device list acquired in step S904, the task execution unit 43 identifies information about the device corresponding to the specification about the non-management target of the task to be executed. At this time, based on the network information, such as IP address information, included in the specification about the non-management target, the device DevA2 is identified from the device list illustrated in Fig. 5.

In step S906, the task execution unit 43 determines whether the device identified as the non-management target device in step S905 exists in the device list. If the device identified as the non-management target device exists in the device list (YES in step S906), the processing proceeds to step S907. If the device identified as the non-management target device does not exist in the device list (NO in step S906), the processing proceeds to step S908.

In step S907, the data storage unit 44 deletes, from the device list, the device information about the device identified as the non-management target device in step S905. In the present embodiment, the device information managed in a record of the device DevA2 is deleted from the device list illustrated in Fig. 5.

In step S908, the task execution unit 43 executes the task for which the execution instruction is issued from the task management unit 42. In the present embodiment, as the device search task, the task execution unit 43 performs processing for transmitting a request to acquire device information, based on the specification in the "Search-Target IP Address" edit box.

Through the above-described processing, according to the present embodiment, in a case where a specification about the non-management target of the device search task is set, a device corresponding to the specification can be excluded from management target devices even if the device has already been managed as a management target device. Thus, the present embodiment is effective in preventing the implementation of unnecessary device management for a device specified as a non-management target device.

Next, a second embodiment of the present invention will be described. There is a case where a device search is performed periodically or at an appointed time because "Execute Promptly" is not set as "Execution Type" of a device search task. In a case where a device is specified as a non-management target device in such a device search task, the specified device that the user desires to exclude from the management target devices of another task can be erroneously selected before the device search task is executed. In the present embodiment, a method for addressing such an issue will be described.

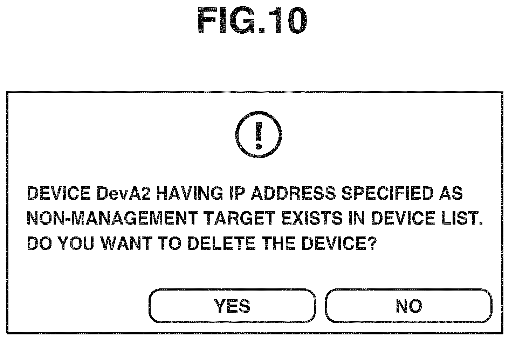

In the present embodiment, the task creation unit 41 performs processing for confirming the specification about the non-management target when the data storage unit 44 stores the information about the task in step S805. In this case, the task creation unit 41 provides a dialogue box illustrated in Fig. 10.

The dialogue box illustrated in Fig. 10 is displayed as a confirmation screen, and includes a message for prompting the user to confirm whether to delete the device corresponding to the information specified as the non-management target, from the device list including the current management target devices. The dialogue box illustrated in Fig. 10 further includes a "YES" button for deleting the information about the corresponding device from the device list and a "NO" button for keeping the information about the corresponding device in the device list.

In a case where the administrator selects the "YES" button on the dialogue box illustrated in Fig. 10, the data storage unit 44 deletes the device information managed in the record of the device DevA2 from the device list illustrated in Fig. 5. If there is a plurality of devices corresponding to the information specified as the non-management target, information about the plurality of devices may be provided as a list of deletion candidates so that the administrator can select, from the provided list, one or more devices to be deleted from the device list.

Next, a third embodiment of the present invention will be described. As described above, the task creation unit 41 can create various tasks, such as the device security monitoring task, the device power management task, and a device status monitoring task, in addition to the device search task. In one embodiment, when a task different from the device search task is created and executed, the device specified as the non-management target device is to be excluded from the target devices of the different task.

In a case where a task different from the device search task is to be created, then in step S806, the task creation unit 41 acquires task information about the device search task that has been stored so far by the data storage unit 44. The task creation unit 41 then provides a task creation screen after excluding the information about the device corresponding to the specification about the non-management target in the task information, from selection candidates of the target devices of the task. If the device specified as the non-management target device does not exist in the device list illustrated in Fig. 5, the device list is displayed as the selection candidates of the target devices, on the task creation screen.

When the task creation unit 41 provides the task creation screen after excluding the non-management target device from the selection candidates, the data storage unit 44 may additionally perform control to delete the device information managed in the record of the non-management target device from the device list illustrated in Fig. 5.

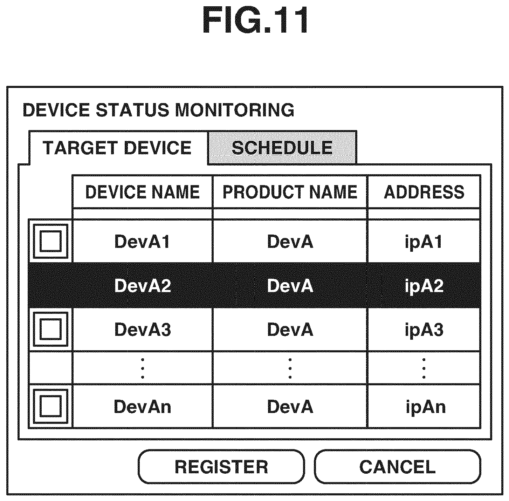

Fig. 11 illustrates a task creation screen for the device status monitoring task that is an example of a task different from the device search task.

The device status monitoring task is a task for checking whether the target device 2000 is operating normally by periodically acquiring a status from the target device 2000. The task creation screen for the device status monitoring task includes a "Target Device" tab and a "Schedule" tab.

The "Target Device" tab displays a device list for selecting the target device 2000 for which the device status monitoring task is to be executed. The "Schedule Tab" includes the "Execution Type" edit box and the "Execution Time" edit box illustrated in Fig. 7, in which a schedule for executing the created task can be set. The task creation screen for the device status monitoring task further includes a "Register" button for registering the set task and a "Cancel" button for canceling the registration processing.

In the present embodiment, to prevent the device DevA2 having the IP address "ipA2" specified as the non-management target from being selected as the target device 2000, the task creation unit 41 displays the information about the device DevA2 in a disabled state. Alternatively, the information about the device DevA2 may simply be hidden instead of being displayed in a disabled state. In addition, if there is a plurality of non-management target devices, a list of the non-management target devices may be displayed separately.

In a case where a task different from the device search task is to be executed, in step S908, the task execution unit 43 acquires the task information about the device search task that has been stored so far by the data storage unit 44. Then, the task execution unit 43 may execute the task after excluding the device corresponding to the specification about the non-management target in the task information, from the target devices of the task. Furthermore, at this timing, the data storage unit 44 may additionally perform control to delete the device information managed in the record of the non-management target device from the device list illustrated in Fig. 5.

In the present embodiment, the non-monitoring target device may be identified from the above-described non-management target device list instead of being identified from the task information about the device search task.

Next, a fourth embodiment of the present invention will be described. In a case where a device to be excluded from the management target devices of the device search task is specified, device information about the device is to be deleted from the device list. In some cases, the data storage unit 44 stores operational information about the device, such as counter value information and history information, which has been acquired so far.

In the present embodiment, the operational information includes various types of information acquired from the device, such as counter value information, information about various histories, device status information, and remaining sheet amount information. The operational information is stored and accumulated by the data storage unit 44 through a task such as the device monitoring task. Such operational information may be used even if the device is specified as a non-management target device. Thus, in one embodiment, the operational information about the non-management target device accumulated so far is to be kept even though the device information about the device is deleted from the device list.

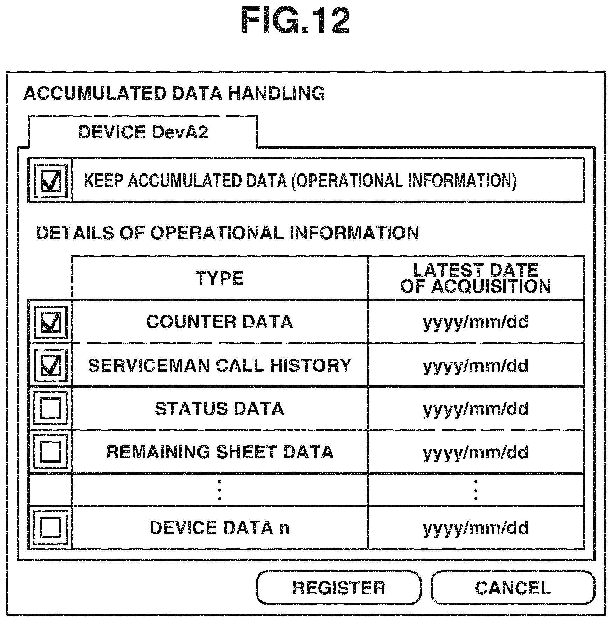

In the present embodiment, when the device information about the non-management target device is deleted from the device list, the data storage unit 44 determines whether the accumulated operational information about the non-management target device is stored in a storage unit such as the HDD 209. If the data storage unit 44 determines that the operational information is stored, a screen illustrated in Fig. 12 is displayed. Fig. 12 illustrates the screen for setting how to handle the accumulated data. The data storage unit 44 does not delete the operational information of the type(s) specified via the screen, and deletes the operational information of any other type together with the device information to be deleted from the device list.

The screen illustrated in Fig. 12 will be described. The "Accumulated Data Handling" screen includes a "Keep Accumulated Data" checkbox for selecting whether to keep or delete the accumulated operational information about a non-management target device.

The administrator can specify the type(s) of operational information to be kept in a storage unit by checking the "Keep Accumulated Data" checkbox. On the "Accumulated Data Handling" screen illustrated in Fig. 12, a "Details of Operational Information" section displays a detailed list including information about "Type" and "Latest Date of Acquisition". A checkbox is provided for each "Type" of operational information in the "Details of Operational Information" section, so that the administrator can individually select and specify the type of operational information to be left undeleted.

The "Accumulated Data Handling" screen illustrated in Fig. 12 further includes a "Register" button for registering the set contents in the data storage unit 44 and a "Cancel" button for canceling the registration processing.

In the present embodiment, "Counter Data" and "Serviceman Call History" about the device DevA2 having the IP address "ipA2" specified as the non-management target are selected as the operational information to be kept, and the other data such as "Status Data" and "Remaining Sheet Data" about the device DevA2 are selected as the operational information to be deleted.

In the present embodiment, the "Accumulated Data Handling" screen illustrated in Fig. 12 is provided for the device specified as the non-management target device. Alternatively, before the device search task is created, common settings similar to the settings illustrated in Fig. 12 can be preset and preregistered in the device management software. In a case where the settings for the operational information to be kept are preset for the device specified as the non-management target device, the data storage unit 44 can automatically delete a part of the operational information based on the preset settings without displaying the "Accumulated Data Handling" screen illustrated in Fig. 12.

An apparatus or a system configured by appropriately combining the above-described embodiments and a method performed thereby are also included in the embodiments of the present invention.

The apparatus or the system that executes one or more software (programs) for implementing the functions according to the above-described embodiments is included in the embodiments of the present invention. The method performed by the apparatus or the system to implement the above-described embodiments is also included in the embodiments of the present invention. Furthermore, the one or more programs are supplied to the apparatus or the system via a network or various storage media, so that one or more computers (CPUs or micro processing units (MPUs)) in the apparatus or the system load the one or more programs into one or more memories and execute the one or more programs. In other words, the one or more programs and the various computer-readable storage media storing the one or more programs are also included in the embodiments of the present invention. Furthermore, the embodiments of the present invention can also be implemented by a circuit (e.g., an application specific integrated circuit (ASIC)) for implementing the functions according to the above-described embodiments.

The embodiments of the present invention make it possible to provide a device management method capable of suppressing the provision of a device management function to a device specified as a non-management target device.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to embodiments, it is to be understood that the invention is not limited to the disclosed embodiments. The invention is as set out in the appended claims.

## Claims

1. An information processing apparatus (1000, 40) comprising:
a storage unit (44) configured to store and manage device information about a plurality of management target devices (DevA1, DevA2, DevAn, DevB1, DevB2, DevBn), initially acquired though a first device search and stored in the storage unit (44),
acceptance means (43) for accepting settings, in a case where a second device search on a network is to be set, including a first specification about a search range for finding a management target device and a second specification about information for identifying a non-management target device, wherein the non-management target device has been initially specified in the first device search as a management target device and stored as such in the device information stored by the storage unit (44);
task execution means (43) for performing the second device search in the search range excluding the non-management target;
identification means (43) for identifying device information about the non-management target device corresponding to the second specification included in the accepted settings from the device information stored and managed in the storage unit (44); and
deletion means (44) for deleting the identified device information from the device information stored and managed in the storage unit (44).

2. The information processing apparatus according to claim 1, wherein, in a case where the second device search on the network is to be performed based on the accepted settings, the identification means (43) identifies the device information about the non-management target device corresponding to the second specification from the device information stored and managed in the storage unit (44).

3. The information processing apparatus according to claim 1 or 2, further comprising provision means (41) for providing, in a case where the acceptance means (43) accepts the settings including the second specification, a confirmation screen for confirming whether to delete the device information about the non-management target device corresponding to the second specification from the device information stored and managed in the storage unit (44).

4. The information processing apparatus according to any one of claims 1 to 3, wherein, in a case where the deletion means (44) deletes the identified device information, the deletion means (44) also deletes, from the storage unit (44), at least a part of accumulated operational information about the non-management target device indicated by the identified device information.

5. The information processing apparatus according to any one of claims 1 to 4, further comprising search means (43) for transmitting, in a case where the second device search on the network is performed after the acceptance means accepts the settings including the first specification and the second specification, a request for acquiring device information to one or more communication destinations that exist within the search range corresponding to the first specification and do not include a communication destination identified by the second specification.

6. The information processing apparatus according to any one of claims 1 to 5, wherein the devices (DevA1, DevA2, DevAn, DevB1, DevB2, DevBn) include at least one of a printer, a copy machine, a digital multifunction peripheral, or a three-dimensional (3D) printer.

7. The information processing apparatus according to any one of claims 1 to 6, wherein the information for identifying the non-management target device specified by the second specification includes at least one of an internet protocol (IP) address, an individual identification number, or a device name.

8. The information processing apparatus according to any one of claims 1 to 7, further comprising control means (43) for displaying a device list provided using the device information managed in the storage unit (44),
wherein the control means (43) performs control to display the device list in a state where the device information about the non-management target device corresponding to the second specification included in the accepted settings is excluded from the device list.

9. An information processing apparatus (1000, 40) comprising:
a data storage unit (44) configured to store and manage device information about a plurality of management target devices (DevA1, DevA2, DevAn, DevB1, DevB2, DevBn), initially acquired though a first device search and stored in the storage unit (44):
control means (43) for displaying a device list provided using the device information stored and managed in the storage unit (44); and
acceptance means (43) for accepting settings, in a case where a second device search on a network is to be set, including a first specification about a search range for finding a management target device and a second specification about information for identifying a non-management target device, wherein the non-management target device has been initially specified in the first device search as a management target device and stored as such in the device information stored by the storage unit (44);
wherein, after the acceptance means accepts the settings for the second device search and when a monitoring task different from a device search task is created, the control means (43) performs control to display another device list for selecting a device to execute the monitoring task, wherein the another device list includes the device information about the management target device and excludes device information about the non-management target device corresponding to the second specification included in the accepted settings without a user operation on the device list.

10. The information processing apparatus according to claim 9, wherein the control is performed by deleting at least a part of the device information about the non-management target device corresponding to the second specification from the device information stored and managed in the storage unit (44).

11. The information processing apparatus according to claim 10, wherein, in the deleting, at least a part of accumulated operational information about the non-management target device corresponding to the second specification is not deleted.

12. A device management method performed by an information processing apparatus (1000, 40) comprising a storage unit (44) configured to store and manage device information about a plurality of management target devices (DevA1, DevA2, DevAn, DevB1, DevB2, DevBn), initially acquired though a first device search and stored in the storage unit (44), the device management method comprising:
accepting settings (S900-S904), in a case where a second device search on a network is to be set, including a first specification about a search range for finding a management target device and a second specification about information for identifying a non-management target device, wherein the non-management target device has been initially specified in the first device search as a management target device and stored as such in the device information stored by the storage unit (44);
performing the second device search in the search range excluding the non-management target;
identifying (S905, S906) device information about the non-management target device corresponding to the second specification included in the accepted settings from the device information stored and managed in the storage unit (44); and
deleting (S906), in a case where the device information about the non-management target device is identified, the identified device information from the device information stored and managed in the storage unit (44).

13. A device management method performed by an information processing apparatus (1000, 40) comprising a storage unit (44) configured to store and manage device information about a plurality of management target devices (DevA1, DevA2, DevAn, DevB1, DevB2, DevBn), initially acquired though a first device search and stored in the storage unit (44), the device management method comprising:
controlling display of a device list provided using the device information stored and managed in the storage unit (44); and
accepting settings (S900-S904), in a case where a second device search on a network is to be set, including a first specification about a search range for finding a management target device and a second specification about information for identifying a non-management target device, wherein the non-management target device has been initially specified in the first device search as a management target device and stored as such in the device information stored by the storage unit (44);
wherein, after the accepting accepts the settings for the second device search and when a monitoring task different from a device search task is created, in the controlling, another device list is displayed for selecting a device to execute the monitoring task, wherein the another device list includes the device information about the management target device and excludes device information about the non-management target device corresponding to the second specification included in the accepted settings without a user operation on the device list.

14. A program that when executed on a computer causes the computer to perform the method according to claim 12.

15. A program that when executed on a computer causes the computer to perform the method according to claim 13.

## Patentansprüche

1. Informationsverarbeitungsvorrichtung (1000, 40), umfassend:
eine Speichereinheit (44), die konfiguriert ist, Geräteinformation über mehrere Verwaltungszielgeräte (DevA1, DevA2, DevAn, DevB1, DevB2, DevBn), die anfänglich durch eine erste Gerätesuche erfasst und in der Speichereinheit (44) gespeichert wurde, zu speichern und zu verwalten,
eine Annahmeeinrichtung (43) zum Annehmen von Einstellungen in einem Fall, in dem eine zweite Gerätesuche in einem Netzwerk eingestellt werden soll, einschließlich einer ersten Spezifikation über einen Suchbereich zum Finden eines Verwaltungszielgeräts und einer zweiten Spezifikation über Information zum Identifizieren eines Nicht-Verwaltungszielgeräts, wobei das Nicht-Verwaltungszielgerät anfänglich in der ersten Gerätesuche als ein Verwaltungszielgerät spezifiziert und als solches in der von der Speichereinheit (44) gespeicherten Geräteinformation gespeichert wurde;
eine Aufgabenausführungseinrichtung (43) zum Durchführen der zweiten Gerätesuche in dem Suchbereich mit Ausnahme des Nicht-Verwaltungsziels;
eine Identifizierungseinrichtung (43) zum Identifizieren von Geräteinformation über das Nicht-Verwaltungszielgerät entsprechend der zweiten Spezifikation, die in den angenommenen Einstellungen enthalten ist, aus der in der Speichereinheit (44) gespeicherten und verwalteten Geräteinformation; und
eine Löscheinrichtung (44) zum Löschen der identifizierten Geräteinformation aus der in der Speichereinheit (44) gespeicherten und verwalteten Geräteinformation.

2. Informationsverarbeitungsvorrichtung nach Anspruch 1, wobei in einem Fall, in dem die zweite Gerätesuche in dem Netzwerk basierend auf den angenommenen Einstellungen durchgeführt werden soll, die Identifizierungseinrichtung (43) die Geräteinformation über das Nicht-Verwaltungszielgerät entsprechend der zweiten Spezifikation aus der in der Speichereinheit (44) gespeicherten und verwalteten Geräteinformation identifiziert.

3. Informationsverarbeitungsvorrichtung nach Anspruch 1 oder 2, ferner umfassend eine Bereitstellungseinrichtung (41) zum Bereitstellen, in einem Fall, in dem die Annahmeeinrichtung (43) die Einstellungen einschließlich der zweiten Spezifikation annimmt, eines Bestätigungsbildschirms zum Bestätigen, ob die Geräteinformation über das Nicht-Verwaltungszielgerät entsprechend der zweiten Spezifikation aus der in der Speichereinheit (44) gespeicherten und verwalteten Geräteinformation zu löschen ist.

4. Informationsverarbeitungsvorrichtung nach einem der Ansprüche 1 bis 3,
wobei in einem Fall, in dem die Löscheinrichtung (44) die identifizierte Geräteinformation löscht, die Löscheinrichtung (44) auch mindestens einen Teil der akkumulierten Betriebsinformation über das Nicht-Verwaltungszielgerät aus der Speichereinheit (44) löscht, die durch die identifizierte Geräteinformation angegeben wird.

5. Informationsverarbeitungsvorrichtung nach einem der Ansprüche 1 bis 4, ferner umfassend eine Sucheinrichtung (43) zum Übertragen, in einem Fall, in dem die zweite Gerätesuche in dem Netzwerk durchgeführt wird, nachdem die Annahmeeinrichtung die Einstellungen einschließlich der ersten Spezifikation und der zweiten Spezifikation annimmt, einer Anforderung zum Erfassen von Geräteinformation an ein oder mehrere Kommunikationsziele, die innerhalb des Suchbereichs entsprechend der ersten Spezifikation vorhanden sind und kein durch die zweite Spezifikation identifiziertes Kommunikationsziel enthalten.

6. Informationsverarbeitungsvorrichtung nach einem der Ansprüche 1 bis 5,
wobei die Geräte (DevA1, DevA2, DevAn, DevB1, DevB2, DevBn) mindestens eines von einem Drucker, einem Kopierer, einem digitalen Multifunktionsperipheriegerät oder einem dreidimensionalen (3D) Drucker enthalten.

7. Informationsverarbeitungsvorrichtung nach einem der Ansprüche 1 bis 6,
wobei die Information zum Identifizieren des Nicht-Verwaltungszielgeräts, die durch die zweite Spezifikation spezifiziert ist, mindestens eines von einer Internetprotokoll (IP)-Adresse, einer individuellen Identifikationsnummer oder einem Gerätenamen enthält.

8. Informationsverarbeitungsvorrichtung nach einem der Ansprüche 1 bis 7, ferner umfassend eine Steuereinrichtung (43) zum Anzeigen einer Geräteliste, die unter Verwendung der in der Speichereinheit (44) verwalteten Geräteinformation bereitgestellt wird,
wobei die Steuereinrichtung (43) eine Steuerung durchführt, um die Geräteliste in einem Zustand anzuzeigen, in dem die Geräteinformation über das Nicht-Verwaltungszielgerät entsprechend der zweiten Spezifikation, die in den angenommenen Einstellungen enthalten ist, aus der Geräteliste ausgeschlossen ist.

9. Informationsverarbeitungsvorrichtung (1000, 40), umfassend:
eine Datenspeichereinheit (44), die konfiguriert ist, Geräteinformation über mehrere Verwaltungszielgeräte (DevA1, DevA2, DevAn, DevB1, DevB2, DevBn), die anfänglich durch eine erste Gerätesuche erfasst und in der Speichereinheit (44) gespeichert wurden, zu speichern und zu verwalten:
eine Steuereinrichtung (43) zum Anzeigen einer Geräteliste, die unter Verwendung der in der Speichereinheit (44) gespeicherten und verwalteten Geräteinformation bereitgestellt wird; und
eine Annahmeeinrichtung (43) zum Annehmen von Einstellungen in einem Fall, in dem eine zweite Gerätesuche in einem Netzwerk eingestellt werden soll, einschließlich einer ersten Spezifikation über einen Suchbereich zum Finden eines Verwaltungszielgeräts und einer zweiten Spezifikation über Information zum Identifizieren eines Nicht-Verwaltungszielgeräts, wobei das Nicht-Verwaltungszielgerät anfänglich in der ersten Gerätesuche als ein Verwaltungszielgerät spezifiziert und als solches in der von der Speichereinheit (44) gespeicherten Geräteinformation gespeichert wurde;
wobei, nachdem die Annahmeeinrichtung die Einstellungen für die zweite Gerätesuche annimmt und wenn eine Überwachungsaufgabe, die sich von einer Gerätesuchaufgabe unterscheidet, erzeugt wird, die Steuereinrichtung (43) eine Steuerung durchführt, um eine andere Geräteliste zum Auswählen eines Geräts zum Ausführen der Überwachungsaufgabe anzuzeigen, wobei die andere Geräteliste die Geräteinformation über das Verwaltungszielgerät enthält und Geräteinformation über das Nicht-Verwaltungszielgerät entsprechend der zweiten Spezifikation, die in den angenommenen Einstellungen enthalten ist, ohne eine Benutzerbedienung an der Geräteliste ausschließt.

10. Informationsverarbeitungsvorrichtung nach Anspruch 9, wobei die Steuerung durch Löschen mindestens eines Teils der Geräteinformation über das Nicht-Verwaltungszielgerät entsprechend der zweiten Spezifikation aus der in der Speichereinheit (44) gespeicherten und verwalteten Geräteinformation durchgeführt wird.

11. Informationsverarbeitungsvorrichtung nach Anspruch 10, wobei beim Löschen mindestens ein Teil der akkumulierten Bedieninformation über das Nicht-Verwaltungszielgerät entsprechend der zweiten Spezifikation nicht gelöscht wird.

12. Geräteverwaltungsverfahren, das von einer Informationsverarbeitungsvorrichtung (1000, 40) durchgeführt wird, umfassend eine Speichereinheit (44), die konfiguriert ist, Geräteinformation über mehrere Verwaltungszielgeräte (DevA1, DevA2, DevAn, DevB1, DevB2, DevBn), die anfänglich durch eine erste Gerätesuche erfasst und in der Speichereinheit (44) gespeichert wurden, zu speichern und zu verwalten, wobei das Geräteverwaltungsverfahren umfasst:
Annehmen von Einstellungen (S900-S904) in einem Fall, in dem eine zweite Gerätesuche in einem Netzwerk eingestellt werden soll, einschließlich einer ersten Spezifikation über einen Suchbereich zum Finden eines Verwaltungszielgeräts und einer zweiten Spezifikation über Information zum Identifizieren eines Nicht-Verwaltungszielgeräts, wobei das Nicht-Verwaltungszielgerät anfänglich in der ersten Gerätesuche als ein Verwaltungszielgerät spezifiziert und als solches in der von der Speichereinheit (44) gespeicherten Geräteinformation gespeichert wurde;
Durchführen der zweiten Gerätesuche in dem Suchbereich mit Ausnahme des Nicht-Verwaltungsziels;
Identifizieren (S905, S906) von Geräteinformation über das Nicht-Verwaltungszielgerät entsprechend der zweiten Spezifikation, die in den angenommenen Einstellungen enthalten ist, aus der in der Speichereinheit (44) gespeicherten und verwalteten Geräteinformation; und
Löschen (S906) in einem Fall, in dem die Geräteinformation über das Nicht-Verwaltungszielgerät identifiziert wird, der identifizierten Geräteinformation aus der in der Speichereinheit (44) gespeicherten und verwalteten Geräteinformation.

13. Geräteverwaltungsverfahren, das von einer Informationsverarbeitungsvorrichtung (1000, 40) durchgeführt wird, umfassend eine Speichereinheit (44), die konfiguriert ist, Geräteinformation über mehrere Verwaltungszielgeräte (DevA1, DevA2, DevAn, DevB1, DevB2, DevBn), die anfänglich durch eine erste Gerätesuche erfasst und in der Speichereinheit (44) gespeichert wurden, zu speichern und zu verwalten, wobei das Geräteverwaltungsverfahren umfasst:
Steuern der Anzeige einer Geräteliste, die unter Verwendung der in der Speichereinheit (44) gespeicherten und verwalteten Geräteinformation bereitgestellt wird; und
Annehmen von Einstellungen (S900-S904) in einem Fall, in dem eine zweite Gerätesuche in einem Netzwerk eingestellt werden soll, einschließlich einer ersten Spezifikation über einen Suchbereich zum Finden eines Verwaltungszielgeräts und einer zweiten Spezifikation über Information zum Identifizieren eines Nicht-Verwaltungszielgeräts, wobei das Nicht-Verwaltungszielgerät anfänglich in der ersten Gerätesuche als ein Verwaltungszielgerät spezifiziert und als solches in der von der Speichereinheit (44) gespeicherten Geräteinformation gespeichert wurde;
wobei, nachdem beim Annehmen die Einstellungen für die zweite Gerätesuche angenommen werden und wenn eine Überwachungsaufgabe, die sich von einer Gerätesuchaufgabe unterscheidet, erzeugt wird, beim Steuern eine andere Geräteliste zum Auswählen eines Geräts zum Ausführen der Überwachungsaufgabe angezeigt wird, wobei die andere Geräteliste die Geräteinformation über das Verwaltungszielgerät enthält und Geräteinformation über das Nicht-Verwaltungszielgerät entsprechend der zweiten Spezifikation, die in den angenommenen Einstellungen enthalten ist, ohne eine Benutzerbedienung an der Geräteliste ausschließt.

14. Programm, das bei Ausführung auf einem Computer diesen dazu veranlasst, das Verfahren nach Anspruch 12 durchzuführen.

15. Programm, das bei Ausführung auf einem Computer diesen dazu veranlasst, das Verfahren nach Anspruch 13 durchzuführen.

## Revendications

1. Appareil de traitement d'informations (1000, 40) comprenant :
une unité de stockage (44) configurée pour stocker et gérer des informations de dispositifs concernant une pluralité de dispositifs cibles de gestion (DevA1, DevA2, DevAn, DevB1, DevB2, DevBn), initialement acquises par le biais d'une première recherche de dispositifs et stockées dans l'unité de stockage (44),
un moyen d'acceptation (43) pour accepter des paramètres, dans un cas où une seconde recherche de dispositifs sur un réseau doit être paramétrée, comprenant une première spécification concernant une plage de recherche pour trouver un dispositif cible de gestion et une seconde spécification concernant des informations pour identifier un dispositif cible de non-gestion, dans lequel le dispositif cible de non-gestion a été initialement spécifié dans la première recherche de dispositifs comme étant un dispositif cible de gestion et stocké comme tel dans les informations de dispositifs stockées par l'unité de stockage (44) ;
un moyen d'exécution de tâche (43) pour réaliser la seconde recherche de dispositifs dans la plage de recherche à l'exclusion de la cible de non-gestion ;
un moyen d'identification (43) pour identifier des informations de dispositif concernant le dispositif cible de non-gestion correspondant à la seconde spécification comprise dans les paramètres acceptés à partir des informations de dispositifs stockées et gérées dans l'unité de stockage (44) ; et
un moyen de suppression (44) pour supprimer les informations de dispositif identifiées des informations de dispositifs stockées et gérées dans l'unité de stockage (44).

2. Appareil de traitement d'informations selon la revendication 1, dans lequel, dans un cas où la seconde recherche de dispositifs sur le réseau doit être réalisée sur la base des paramètres acceptés, le moyen d'identification (43) identifie les informations de dispositif concernant le dispositif cible de non-gestion correspondant à la seconde spécification à partir des informations de dispositifs stockées et gérées dans l'unité de stockage (44).

3. Appareil de traitement d'informations selon la revendication 1 ou 2, comprenant en outre un moyen de fourniture (41) pour fournir, dans un cas où le moyen d'acceptation (43) accepte les paramètres comprenant la seconde spécification, un écran de confirmation pour confirmer s'il convient de supprimer les informations de dispositif, concernant le dispositif cible de non-gestion correspondant à la seconde spécification, des informations de dispositifs stockées et gérées dans l'unité de stockage (44).

4. Appareil de traitement d'informations selon l'une quelconque des revendications 1 à 3, dans lequel, dans un cas où le moyen de suppression (44) supprime les informations de dispositif identifiées, le moyen de suppression (44) supprime également, de l'unité de stockage (44), au moins une partie d'informations opérationnelles accumulées concernant le dispositif cible de non-gestion indiqué par les informations de dispositif identifiées.

5. Appareil de traitement d'informations selon l'une quelconque des revendications 1 à 4, comprenant en outre un moyen de recherche (43) pour transmettre, dans un cas où la seconde recherche de dispositifs sur le réseau est réalisée après que le moyen d'acceptation a accepté les paramètres comprenant la première spécification et la seconde spécification, une demande d'acquisition d'informations de dispositifs à une ou plusieurs destinations de communication qui existent dans la plage de recherche correspondant à la première spécification et ne comprennent pas de destination de communication identifiée par la seconde spécification.

6. Appareil de traitement d'informations selon l'une quelconque des revendications 1 à 5, dans lequel les dispositifs (DevA1, DevA2, DevAn, DevB1, DevB2, DevBn) comprennent au moins un parmi une imprimante, une photocopieuse, un périphérique multifonction numérique ou une imprimante tridimensionnelle (3D).

7. Appareil de traitement d'informations selon l'une quelconque des revendications 1 à 6, dans lequel les informations pour identifier le dispositif cible de non-gestion spécifié par la seconde spécification comprennent au moins un parmi une adresse protocole Internet (IP), un numéro d'identification individuel ou un nom de dispositif.

8. Appareil de traitement d'informations selon l'une quelconque des revendications 1 à 7, comprenant en outre un moyen de commande (43) pour afficher une liste de dispositifs fournie en utilisant les informations de dispositifs gérées dans l'unité de stockage (44),
dans lequel le moyen de commande (43) réalise une commande pour afficher la liste de dispositifs dans un état où les informations de dispositif concernant le dispositif cible de non-gestion correspondant à la seconde spécification comprise dans les paramètres acceptés sont exclues de la liste de dispositifs.

9. Appareil de traitement d'informations (1000, 40) comprenant :
une unité de stockage de données (44) configurée pour stocker et gérer des informations de dispositifs concernant une pluralité de dispositifs cibles de gestion (DevA1, DevA2, DevAn, DevB1, DevB2, DevBn), initialement acquises par le biais d'une première recherche de dispositifs et stockées dans l'unité de stockage (44) ;
un moyen de commande (43) pour afficher une liste de dispositifs fournie en utilisant les informations de dispositifs stockées et gérées dans l'unité de stockage (44) ; et
un moyen d'acceptation (43) pour accepter des paramètres, dans un cas où une seconde recherche de dispositifs sur un réseau doit être paramétrée, comprenant une première spécification concernant une plage de recherche pour trouver un dispositif cible de gestion et une seconde spécification concernant des informations pour identifier un dispositif cible de non-gestion, dans lequel le dispositif cible de non-gestion a été initialement spécifié dans la première recherche de dispositifs comme étant un dispositif cible de gestion et stocké comme tel dans les informations de dispositifs stockées par l'unité de stockage (44) ;
dans lequel, après que le moyen d'acceptation a accepté les paramètres pour la seconde recherche de dispositifs et lorsqu'une tâche de surveillance différente d'une tâche de recherche de dispositifs est créée, le moyen de commande (43) réalise une commande pour afficher une autre liste de dispositifs pour sélectionner un dispositif pour exécuter la tâche de surveillance, dans lequel l'autre liste de dispositifs comporte les informations de dispositif concernant le dispositif cible de gestion et exclut des informations de dispositif concernant le dispositif cible de non-gestion correspondant à la seconde spécification comprise dans les paramètres acceptés sans opération d'utilisateur sur la liste de dispositifs.

10. Appareil de traitement d'informations selon la revendication 9, dans lequel la commande est réalisée en supprimant au moins une partie des informations de dispositif, concernant le dispositif cible de non-gestion correspondant à la seconde spécification, des informations de dispositifs stockées et gérées dans l'unité de stockage (44).

11. Appareil de traitement d'informations selon la revendication 10, dans lequel, lors de la suppression, au moins une partie d'informations opérationnelles accumulées concernant le dispositif cible de non-gestion correspondant à la seconde spécification n'est pas supprimée.

12. Procédé de gestion de dispositifs réalisé par un appareil de traitement d'informations (1000, 40) comprenant une unité de stockage (44) configurée pour stocker et gérer des informations de dispositifs concernant une pluralité de dispositifs cibles de gestion (DevA1, DevA2, DevAn, DevB1, DevB2, DevBn), initialement acquises par le biais d'une première recherche de dispositifs et stockées dans l'unité de stockage (44), le procédé de gestion de dispositifs comprenant :
l'acceptation de paramètres (S900-S904), dans un cas où une seconde recherche de dispositifs sur un réseau doit être paramétrée, comprenant une première spécification concernant une plage de recherche pour trouver un dispositif cible de gestion et une seconde spécification concernant des informations pour identifier un dispositif cible de non-gestion, dans lequel le dispositif cible de non-gestion a été initialement spécifié dans la première recherche de dispositifs comme étant un dispositif cible de gestion et stocké comme tel dans les informations de dispositifs stockées par l'unité de stockage (44) ;
la réalisation de la seconde recherche de dispositifs dans la plage de recherche à l'exclusion de la cible de non-gestion ;
l'identification (S905, S906) d'informations de dispositif concernant le dispositif cible de non-gestion correspondant à la seconde spécification comprise dans les paramètres acceptés à partir des informations de dispositifs stockées et gérées dans l'unité de stockage (44) ; et
la suppression (S906), dans un cas où les informations de dispositif concernant le dispositif cible de non-gestion sont identifiées, des informations de dispositif identifiées des informations de dispositifs stockées et gérées dans l'unité de stockage (44).

13. Procédé de gestion de dispositifs réalisé par un appareil de traitement d'informations (1000, 40) comprenant une unité de stockage (44) configurée pour stocker et gérer des informations de dispositifs concernant une pluralité de dispositifs cibles de gestion (DevA1, DevA2, DevAn, DevB1, DevB2, DevBn), initialement acquises par le biais d'une première recherche de dispositifs et stockées dans l'unité de stockage (44), le procédé de gestion de dispositifs comprenant :
la commande de l'affichage d'une liste de dispositifs fournie en utilisant les informations de dispositifs stockées et gérées dans l'unité de stockage (44) ; et
l'acceptation de paramètres (S900-S904), dans un cas où une seconde recherche de dispositifs sur un réseau doit être paramétrée, comprenant une première spécification concernant une plage de recherche pour trouver un dispositif cible de gestion et une seconde spécification concernant des informations pour identifier un dispositif cible de non-gestion, dans lequel le dispositif cible de non-gestion a été initialement spécifié dans la première recherche de dispositifs comme étant un dispositif cible de gestion et stocké comme tel dans les informations de dispositifs stockées par l'unité de stockage (44) ;
dans lequel, après que l'acceptation a accepté les paramètres pour la seconde recherche de dispositifs et lorsqu'une tâche de surveillance différente d'une tâche de recherche de dispositifs est créée, dans la commande, une autre liste de dispositifs est affichée pour sélectionner un dispositif pour exécuter la tâche de surveillance, dans lequel l'autre liste de dispositifs comporte les informations de dispositif concernant le dispositif cible de gestion et exclut des informations de dispositif concernant le dispositif cible de non-gestion correspondant à la seconde spécification comprise dans les paramètres acceptés sans opération d'utilisateur sur la liste de dispositifs.

14. Programme qui, lorsqu'il est exécuté sur un ordinateur, amène l'ordinateur à réaliser le procédé selon la revendication 12.

15. Programme qui, lorsqu'il est exécuté sur un ordinateur, amène l'ordinateur à réaliser le procédé selon la revendication 13.
